## Europäisches Patentamt
## European Patent Office
## Office européen des brevets

(11) Numéro de publication: **0 137 870**
**B1**

(12) **FASCICULE DE BREVET EUROPÉEN**

(45) Date de publication du fascicule du brevet:
14.01.87

(21) Numéro de dépôt: **83201347.8**

(22) Date de dépôt: **20.09.83**

(51) Int. Cl.⁴: **G 09 B 9/08**

(54) Simulateur pour l'entraînement de pilotes d'avions.

(43) Date de publication de la demande:
**24.04.85 Bulletin 85/17**

(45) Mention de la délivrance du brevet:
**14.01.87 Bulletin 87/3**

(84) Etats contractants désignés:
**AT BE CH DE FR GB IT LI LU NL SE**

(56) Documents cité:
**GB-A-1 060 074**
**GB-A-1 350 941**
**GB-A-1 545 121**
**US-A-4 019 261**

(73) Titulaire: **ATELIERS DE CONSTRUCTIONS ELECTRIQUES DE CHARLEROI (ACEC) Société Anonyme, Avenue Lloyd George 7, B-1050 Bruxelles (BE)**

(72) Inventeur: **Neumann, Jacques, Avenue Minerve 15 Boîte 110, B-1190 Forest (BE)**

(74) Mandataire: **Bossard, Franz, ACEC - Service des Brevets Boîte Postale 4, B-6000 Charleroi (BE)**

## Description

Il existe déjà des simulateurs pour l'entraînement de pilotes d'avions comprenant une base posée au sol, une plate-forme supportant un cockpit d'avion ou un poste d'équipage dont l'intérieur reproduit l'aspect d'un cockpit réel et un ensemble de vérins et éventuellement ciseaux disposés entre la base et la plate-forme et actionnés au moyen d'un dispositif hydraulique de commande. De tels simulateurs sont décrits par exemple dans les brevets US 2787842, US-2924028 et US-Re-27051.

La présente invention, a pour objet un simulateur du genre décrit ci-dessus d'une exécution particulièrement légère qui peut être monté et abrité dans des hangars de dimensions normales, même lorsque leur hauteur ne dépasse pas environ 4 mètres, tout en permettant des mouvements d'ampleur suffisante à trois, quatre, cinq ou même six degrés de liberté.

Le simulateur suivant l'invention est caractérisé en ce que la plate-forme habituelle très lourde et rigide est remplacée par une structure autoportante en forme de corbeille dont le fond se confond avec le fond du cockpit simulé et dont le bord supérieur se trouve environ à la hauteur des bords inférieurs des fenêtres de ce cockpit, et en ce que les vérins et éventuellement ciseaux reliant la base à la structure autoportante sont fixés en au moins trois endroits à proximité du bord supérieur de cette structure et sont dirigés vers la base posée au sol en s'écartant de la structure autoportante.

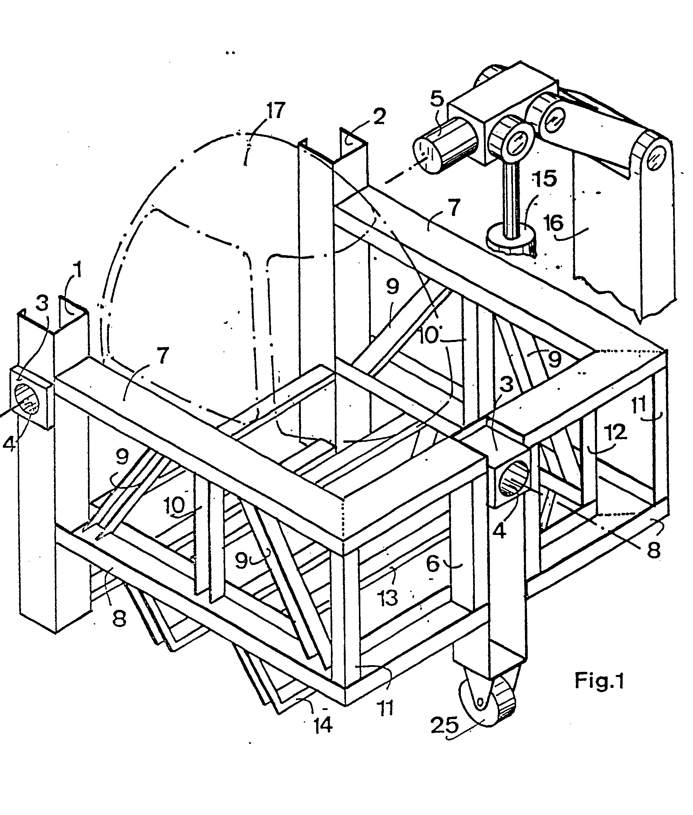

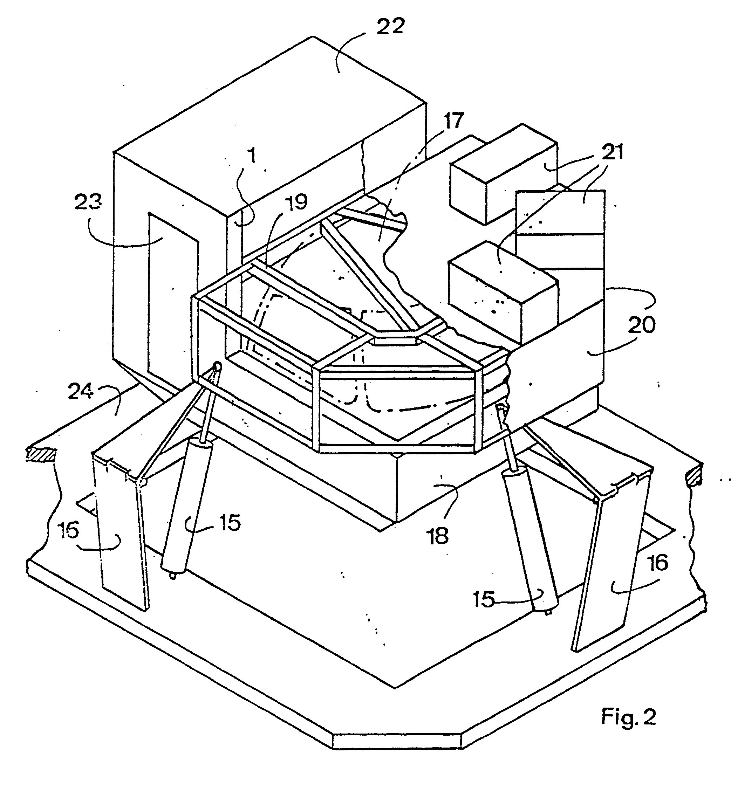

L'invention est expliquée ci-dessous par rapport à un exemple d'une forme d'exécution en se référant au dessin annexé. La figure 1 du dessin est une vue en perspective d'un ensemble rudimentaire suivant l'invention, comprenant une structure autoportante en forme de corbeille, une base non montrée et un ensemble de vérins et ciseaux reliant entre elles la base et la structure autoportante. La figure 2 est une vue en perspective d'un simulateur suivant l'invention complètement équipé.

A la figure 1, une structure autoportante en forme de corbeille comprend deux montants arrières 1 et 2, chacun équipé d'un bloc alésé 3 dont l'alésage 4 est destiné à recevoir un tourillon 5 représenté retiré de l'alésage du bloc logé dans le montant 2. Un autre montant 6, également équipé d'un bloc alésé, est disposé dans le plan de symétrie des montants 1 et 2 dans la charpente avant de la structure autoportante. Cette structure est constituée de deux cadres en profils en U très larges 7 et 8 maintenus à distance l'un de l'autre au moyen d'entretoises relativement légères 9, 10, 11 et 12. Le fond de la structure en corbeille est défini par des poutrelles 13 et est renforcé par des étriers 14 s'étendant vers le bas.

La structure autoportante en forme de corbeille est ainsi constituée en poutres entretoisées dont les bords intérieurs des cadres 7 et les entretoises 9, 10 et 12 définissent une surface intérieure de la corbeille et dont les bords extérieurs des cadres 7 et 8 et les entretoises 11 en définissent une surface extérieure. Entre ces deux surfaces est réservé un espace de la largeur des poutres en profils d'U des cadres 7 et 8 ou, ce qui, en l'occurence, revient au même, de la largeur des montants 1, 2 et 6. Cet espace entre les deux surfaces intérieure et extérieure de la corbeille peut être réservé, au moins en partie, pour abriter des câbles et des circuits de commande du simulateur. Il en est de même de l'espace en dessous des poutrelles 13 définissant le fond de la structure en corbeille et au dessus des étriers de renforcement 14.

Les blocs alésés 3, solidarisés avec les montants 1, 2 et 6 à la hauteur du bord supérieur de la structure autoportante, permettent la fixation de cette structure à des ensembles de vérins et/ou de ciseaux. En l'occurence, chaque bloc alésé 3 peut recevoir un tourillon 5 relié d'une part à un vérin 15 et d'autre part à des ciseaux 16 comme représenté schématiquement, retiré hors d'un alésage 4, à la figure 1. Si tel est le cas, le simulateur peut exécuter des mouvements à trois degrés de liberté notamment la montée et descente, le tangage autour d'un axe quelconque parallèle à l'axe traversant les montants 1 et 2 et le roulis autour d'un axe quelconque parallèle à l'axe passant par l'alésage 4 du montant 6, perpendiculaire à l'axe de tangage.

Il est possible d'augmenter le nombre de degrés de liberté du mouvement du simulateur jusqu'à six. Il suffit de remplacer les ciseaux, soit en partie, soit en totalité, par des vérins. Toutefois, plus le nombre de degrés de liberté est grand, plus coûteux est le dispositif de commande.

A la surface intérieure de la structure en forme de corbeille est fixée la garniture intérieure d'un cockpit d'avion 17, esquissé en pointillé.

La figure 2 représente une vue en perspective d'un simulateur reprenant l'agencement principal montré à la figure 1.

La structure autoportante en forme de corbeille y est montrée en 18, recouverte de tôles d'habillage. La garniture intérieure du cockpit d'avion est visible à travers un cadre de support 19 pour un ensemble d'écrans 20 combinés avec des projecteurs 21 et des miroirs non visibles sur le dessin. Le cadre de support 19 est fixé de préférence aux montants 1 et 2 de la structure en forme de corbeille. A la figure 2, le montant 2 n'est pas visible parce qu'il est caché par une tôle d'habillage.

Aux montants 1 et 2 peut être fixée en outre une chambre 22 destinée à l'instructeur de l'élève pilote. Une porte 23 de cette chambre peut constituer l'unique accès à l'intérieur du simulateur.

La figure 2 montre aussi de manière schématique la fixation des vérins 15 et ciseaux 16 dans une base 24 en forme de cadre.

Dans l'ensemble à trois degrés de liberté représenté à la figure 1, les alésages 4 des blocs 3 logés dans les montants 1 et 2 sont disposés selon un même axe. D'autre part, les ciseaux 16 reliés aux tourillons 5 engagés dans ces deux alésages 4 maintiennent obligatoirement l'axe passant par ces deux alésages 4 dans le plan perpendiculaire dans lequel peuvent évoluer les extrémités de ces deux ciseaux portant les tourillons 5. Grâce à ces dispositions, il est possible d'éviter un axe de rotation vertical entre ces deux tourillons et les ciseaux 16 qui les portent.

Par contre, un tel axe de rotation vertical ou une rotule est en général indispensable à l'endroit du tourillon 5 engagé dans l'alésage 4 du bloc 3 logé dans le montant 6. En effet, en cet endroit la rotule ne peut être supprimée que pour des mouvements de très faible amplitude.

Les montants 1, 2 et 6 sont prolongés vers le bas jusqu'à un niveau environ égal ou inférieur au point le plus bas de la structure entretoisée en corbeille. A l'extrémité inférieure de ces prolongements est prévu un agencement pour fixer des roues 25, par exemple comme montré à l'endroit du montant 6. Ces roues permettent le déplacement de la structure autoportante lors du montage dans un hangar non équipé d'un pont roulant. Avant l'assemblage complet du cadre constituant la base 24 posée au sol, la structure autoportante complétement équipée est déplacée sur ses roues dans l'intérieur de ce cadre dont l'assemblage est terminé ensuite. Dès que les tourillons 5 sont engagés dans les alésages 4 des blocs 3 de la structure autoportante, celle-ci peut être soulevée au moyen des vérins et les roues 25 peuvent être enlevées.

Grâce à la structure entretoisée, autoportante, en forme de corbeille 18, qui remplace la plate-forme des simulateurs connus par un élément très léger, de grandes accélérations peuvent être réalisées au moyen d'un dispositif de commande hydraulique, non représenté, de puissance modérée. Le fait que les vérins 15 et ciseaux 16 sont fixés à proximité des bords supérieurs de la structure autoportante 18 et s'en écartent sous un angle de grandeur nécessairement limitée, pourrait avoir pour conséquence de restreindre un peu l'envergure des déplacements latéraux du simulateur, mais présente l'énorme avantage de réduire la hauteur totale nécessaire à l'évolution libre des mouvements du simulateur. De toute manière, pour un simulateur à seulement trois degrés de liberté, cette limitation des déplacements latéraux est sans aucune importance. D'autre part, grâce au fait que ces vérins 15 et ciseaux 16 sont fixés à proximité des bords supérieurs de la structure autoportante, il est possible d'installer le simulateur dans un hangar dont la hauteur ne dépasse guère 4 m. Pour la même raison, l'accès du simulateur par la porte 23 ne nécessite pas l'utilisation d'échelles ou escaliers mobiles encombrants; car cette porte peut être abaissée à un niveau très bas, facilitant l'accès et rendant possible la sortie d'urgence en toute sécurité et à tout moment.

## Revendications

1. Simulateur pour l'entraînement de pilotes d'avions comprenant une base posé au sol (24), une plate-forme supportant un poste d'équipage d'avion dont l'intérieur reproduit l'intérieur d'un cockpit réel (17) et un ensemble de vérins (15) et éventuellement ciseaux (16) disposés entre la base (24) et la plate-forme et actionnés au moyen d'un dispositif hydraulique de commande, caractérisé en ce que la plate-forme est remplacée par une structure entretoisée, autoportante, en forme de corbeille (18) dont le fond se confond avec le fond du cockpit simulé (17) Et dont le bord supérieur se trouve environ à la hauteur des bords inférieurs des fenêtres du cockpit simulé (17) et en ce que les vérins (15) et éventuellement ciseaux (16) reliant la base à la dite structure (18) sont fixés en au moins trois endroits à proximité du bord supérieur de la dite structure (18) et sont dirigés vers la base (24) posée au sol en s'écartant de la dite structure.

2. Simulateur suivant la revendication 1, caractérisé en ce que la dite structure est constituée en poutres (7 à 14) entretoisées réservant un espace important entre la surface extérieure et la surface intérieure, en ce que la garniture intérieure d'un cockpit d'avion (17) est fixée aux parties de la structure en poutres entretoisées définissant la surface intérieure et en ce qu'au moins une partie de l'espace entre la dite surface intérieure et la dite surface extérieure abrite des câbles et parties de circuits de commande du simulateur.

3. Simulateur suivant une des revendications 1 ou 2, caractérisé en ce qu'à la dite structure est fixée une chambre (22) destinée à l'instructeur.

4. Simulateur suivant une des revendications précédentes, caractérisé en ce qu'à la dite structure ou à la chambre (22) y fixee est attaché un cadre de support (19) pour une installation de visualisation.

5. Simulateur suivant une des revendicatiolns précédentes, caractérisé en ce que la dite structure comprend trois montants (1, 2, 6) supportant des blocs de fixation pour des tourillons (5) actionnés par les vérins (15) et équipés d'agencements de fixation pour des roues (25).

6. Simulateur suivant une des revendications précédentes, caractérisé en ce que les alésages des blocs de fixation de deux des montants (1, 2, 6) sont disposés selon un même axe et en ce que les tourillons (5) y engagés sont reliés aux vérins (15) qui les supportent sans l'entremise d'une rotule.

## Patentansprüche

1. Flugsimulator zur Ausbildung von Piloten, aus einer auf dem Boden ruhenden Grundplatte (24), einer Plattform, die einen Mannschaftsraum trägt, dessen Inneres das Aussehen eines wirklichen Cockpits (17) hat, und aus einer Gesamtheit von Hubzylindern (15) und eventuell Scheren (16), die zwischen der Grundplatte (24) und der Plattform angeordnet sind und durch eine hydraulische Steuervorrichtung betätigt werden,

dadurch gekennzeichnet, daß die Plattform durch eine korbförmige, verstrebte selbsttragende Struktur (18) ersetzt ist, deren Boden in den Boden des simulierten Cockpits (17) übergeht, und deren oberer Rand ungefähr in Höhe der unteren Ränder der Fenster des simulierten Cockpits (17) gelegen ist, und daß die Hubzylinder (15) und eventuell Scheren (16), die die Grundplatte mit der besagten Struktur (18) verbinden, an mindestens drei Stellen in der Nähe des oberen Randes der besagten Struktur (18) befestigt sind und nach der auf dem Boden ruhenden Grundplatte (24) gerichtet sind, wobei sie sich von der besagten Struktur entfernen.

2. Flugsimulator gemäß Anspruch 1, dadurch gekennzeichnet, daß die besagte Struktur von verstrebten Balken (7 bis 14) gebildet wird, bei denen zwischen der äußeren und der inneren Oberfläche ein bedeutender Zwischenraum vorhanden ist, daß die Innenausstattung eines Cockpits (17) an den Teilen der Struktur aus verstrebten Balken befestigt ist, die die innere Oberfläche definieren, und daß in mindestens einem Teil des Zwischenraums zwischender besagten inneren Oberfläche und der besagten äußeren Oberfläche Kabel und Teile von Steuerkreisen des Flugsimulators untergebracht sind.

3. Flugsimulator gemäß einem der Ansprüche 1 oder 2, dadurch gekennzeichnet, daß an der besagten Struktur eine für den Ausbilder bestimmte Kabine (22) befestigt ist.

4. Flugsimulator gemäß einem der vorhergehenden Ansprüche, dadurch gekennzeichnet, daß an der besagten Struktur oder an der damit verbundenen Kabine ein Halterahmen (19) für eine Bildwiedergabeanlage befestigt ist.

5. Flugsimulator gemäß einem der vorhergehenden Ansprüche, dadurch gekennzeichnet, daß die besagte Struktur drei Pfosten (1, 2, 6) aufweist, die Befestigungsblöcke für durch die Hubzylinder (15) betätigte Drehzapfen (5) tragen, und mit Befestigungseinrichtungen für Räder (25) ausgerüstet sind.

6. Flugsimulator gemäß einem der vorhergehenden Ansprüche, dadurch gekennzeichnet, daß die Bohrungen der Befestigungsblöcke von zwei der Pfosten (1, 2, 6) dieselbe Achse besitzen, und daß die darin eingeschobenen Drehzapfen (5) mit den Hubzylindern (15) verbunden sind, die diese Drehzapfen ohne dazwischen angeordnetes Kugelgelenk tragen.

## Claims

1. Flight training simulator for pilots, comprising a base placed on the ground (24), a platform supporting an aircrew compartment the interior of which reproduces the interior of a real cockpit (17), and a group of jacks (15) and possibly scissors elements (16) situated between the base (24) and the platform and operated by means of a hydraulic control device, characterised in that the platform is replaced by a braced self-supporting structure in the form of a cage (18) the bottom of which is identical with the bottom of the simulated cockpit (17) and the upper edge of which is situated approximately at the height of the lower edges of the windows of the simulated cockpit (17), and in that the jacks (15) and possibly scissors elements (16) connecting the base to the said structure (18) are fixed at at least three places in the vicinity of the upper edge of the said structure (18) and are directed towards the base (24) placed on the ground as they extend away from the said structure.

2. Simulator according to claim 1, characterised in that the said structure is constituted by braced beams (7 to 14) providing a considerable space between the external surface and the internal surface, in that the internal fittings of an aircraft cockpit (17) are secured to the parts of the braced beam structure defining the internal surface, and in that at least a part of the space between the said internal surface and the said external surface shelters cables and parts of control circuits of the simulator.

3. Simulator according to one of claims 1 or 2, characterised in that a chamber (22) intended for the instructor is secured to the said structure.

4. Simulator according to one of the preceding claims, characterised in that a supporting frame (19) for a display installation is secured to the said structure or to the chamber (22) secured thereto.

5. Simulator according to one of the preceding claims, characterised in that the said structure comprises three uprights (1, 2, 6) supporting securing blocks for journals (5) actuated by the jacks (15) and provided with means for attaching wheels (25).

6. Simulator according to one of the preceding claims, characterised in that the bores of the securing blocks of two of the uprights (1, 2, 6) are situated on one and the same axis and in that the journals (5) engaged thereon are connected to the jacks (15) which support them without the interposition of a ball joint.

Fig.1

Fig. 2